(19) Europäisches Patentamt
European Patent Office
Office européen des brevets

(11) **EP 2 533 197 B1**

(12) **EUROPEAN PATENT SPECIFICATION**

(45) Date of publication and mention
of the grant of the patent:
**28.10.2020   Bulletin 2020/44**

(51) Int Cl.:
***G06T 5/00*** *(2006.01)*

(21) Application number: **12171034.7**

(22) Date of filing: **06.06.2012**

(54) **Parameter-less noise reduction filter**

Parameterloser Rauschverringerungsfilter

Filtre de réduction de bruit sans paramètres

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.06.2011   US 201113154124**

(43) Date of publication of application:
**12.12.2012   Bulletin 2012/50**

(73) Proprietor: **Toshiba Medical Systems Corporation
Otawara-shi, Tochigi-ken 324-8550 (JP)**

(72) Inventors:
• **Yang, Zhi
Vernon Hills, IL  60061 (US)**
• **Zamyatin, Alexander
Vernon Hills, IL  60061 (US)**
• **Zou, Yu
Vernon Hills, IL  60061 (US)**
• **Silver, Michael D.
Vernon Hills, IL 60061 (US)**

(74) Representative: **Moreland, David et al
Marks & Clerk LLP
Aurora
120 Bothwell Street
Glasgow G2 7JS (GB)**

(56) References cited:
**EP-A2- 1 383 082          WO-A1-2012/056364
US-A1- 2003 099 405     US-A1- 2010 284 626**

• **HSIEH JIANG: "Adaptive streak artifact reduction
in computed tomography resulting from
excessive x-ray photon noise", MEDICAL
PHYSICS, AIP, MELVILLE, NY, US, vol. 25, no. 11,
1 November 1998 (1998-11-01), pages 2139-2147,
XP012010348, ISSN: 0094-2405, DOI:
10.1118/1.598410**

**Description**

FIELD

Embodiments described herein relate generally to a noise reduction method for X-ray CT measurements.

BACKGROUND

X-ray CT image quality often seriously deteriorates by noise and streak components caused by insufficient photons. This problem can be relaxed by increasing an X-ray dose, but this solution cannot clinically be permitted in terms of safety of a patient. In order to achieve diagnostically useful image quality at a safe dose level, various attempts have been conventionally made over the last several decades so as to seek for a desirable solution required to greatly reduce noise and streak components. The aforementioned studies, which were set up upon receiving enhancement of consciousness about a low dose, gain importance very much and have received great attention.

In order to improve a result, the conventional attempts use an adaptive filter in place of a fixed filter. Some examples of the fixed filter include a triangular filter and bilateral filter. Some examples of the adaptive filter include an adaptive Gaussian filter and adaptive trimmed mean filter.

In a conventional adaptive filter, its filter parameters have to be appropriately adjusted. This adjustment is individually optimized for each image according to empirical rules. In another exemplary filter, a variance of a Gaussian kernel is the same as a noise variance of data. Since individual adjustment is similarly made for each image, a reduction of noise and/or streak components by the aforementioned adaptive filter of the related art is insufficient.

US 2010/284626 relates to a method for enhancing the quality of an image dataset, such as, e.g., reducing the noise in a noisy image data set and increasing the contrast in the image data set. The method may be used for processing a sequence of image datasets, e.g. night vision image datasets, wherein said sequence comprises at least two image datasets each having at least two pixels, and wherein each pixel has an intensity value. The method comprises calculating a structure tensor for each pixel in an image dataset comprised in the sequence of image datasets; calculating values in a summation kernel based on said structure tensor for each pixel in said image dataset.

US 2003/099405 relates to a technique for reducing noise in pixel images includes modifying initial image data to prevent subsequent image data loss, shrinking the modified image, processing the shrunken image with known segmentation-based filtering techniques which identify and differentially processing structures within the image. After processing, the shrunken image is enlarged to the dimensions of the initial data and subsequently processed to correct intensity irregularities and to preserve CT numbers.

The paper by Jiang HSIEH "Adaptive streak artifact reduction in computed tomography resulting from excessive x-ray photon noise", MEDICAL PHYSICS, AIP, MELVILLE, NY, US, vol. 25, no. 11, 1 November 1998, pages 2139-2147, ISSN: 0094-2405, discloses the reduction of streaking artefacts.

It is still desirable to have an effective filter which can maximize a noise/streak reduction effect but in which its filter parameters are not adjusted by a complicated or ad-hoc method.

An object is to suppress dependence on filter parameters of a filter effect in a method of reducing noise of measurement signals in CT (Computed Tomography).

BRIEF DESCRIPTION OF THE DRAWINGS

FIG. 1 is a block diagram showing the arrangement of a multi-slice X-ray CT apparatus or scanner according to this embodiment;

FIG. 2 is a graph showing the relationship between a variance (y axis) which is predicted using a noise model and actually measured variance (x axis);

FIG. 3 is a graph showing a count range of FIG. 2 and the relationship between a variance (y axis) which is predicted using a noise model and actually measured variance (x axis) in an extended range in which that relationship becomes very nonlinear and counts are small;

FIG. 4 is a graph showing the relationship between effective filter sizes and counts of Gaussian filters associated with a dimension N, VarScale, and VarPower required when a predetermined Gaussian filter is used;

FIG. 5 is a graph showing the relationship between an average count and after-log variance after filtering in an embodiment of a noise and/or streak reduction processor using a predetermined filter having parameter values of a first set according to this embodiment;

FIG. 6 is a graph showing the relationship between an average count and after-log variance after filtering in an embodiment of a noise and/or streak reduction processor using a predetermined filter having parameter values of a second set according to this embodiment;

FIG. 7 is a graph showing the relationship between an average count and after-log variance after filtering in an embodiment of a noise and/or streak reduction processor using a predetermined filter having parameter values of a third set according to this embodiment;

FIG. 8 is a flowchart showing steps involved in one exemplary processing for greatly reducing noise and/or streak components of data measured before a CT image is reconstructed by this embodiment;

FIG. 9A shows a shoulder image which is a reconstructed image, of a data region of which is not filtered by the adaptive Gaussian filter according to an embodiment;

FIG. 9B shows a shoulder image which exhibits a clinically significant improvement as an application result of an adaptive Gaussian filter according to this embodiment;

FIG. 9C shows a difference image of figure 9A and 9B;

FIG. 10A shows another shoulder image which is a reconstructed image, of a data region of which is not filtered by the adaptive Gaussian filter according to an embodiment;

FIG. 10B shows another shoulder image which exhibits a clinically significant improvement as an application result of an adaptive Gaussian filter according to this embodiment;

FIG. 10C shows a difference image of figure 10A and 10B;

FIG. 11A shows a zoomed reconstructed image, which is based on the same data as in FIGS. 10A but is displayed on a lung window;

FIG. 11B shows a zoomed reconstructed image, which is based on the same data as in FIGS10B, but is displayed on a lung window; and

FIG. 11C shows a difference images of figures 11A and 11B.

## DETAILED DESCRIPTION

A method according to this embodiment will be described hereinafter with reference to the drawings.

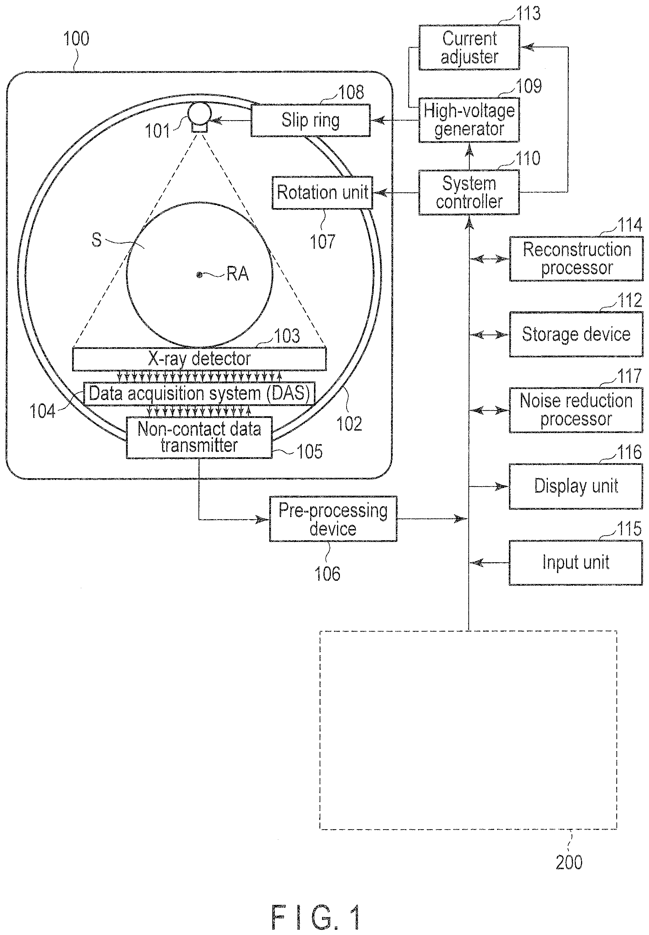

Referring to the drawings, the same reference numerals denote corresponding structures throughout all the drawings. Especially, referring to FIG. 1, FIG. 1 shows an embodiment of a multi-slice X-ray CT apparatus or scanner including a gantry 100 and another processor or unit according to this embodiment. The gantry 100 is shown as a front view, and further includes an X-ray tube 101, annular frame 102, and plural-array or two-dimensional matrix type X-ray detector 103. The X-ray tube 101 and X-ray detector 103 are mounted on the annular frame 102 to sandwich a subject S in a radial direction, and the annular frame 102 is rotated about an axis RA. While the subject S is moved to inside or outside the illustrated page along the axis RA, a rotation unit 107 rotates the frame 102 at a speed as high as, for example, 0.4 sec/rotation.

The multi-slice X-ray CT apparatus further includes a current adjuster 113, and a high-voltage generator 109 which applies a tube voltage to the X-ray tube 101 so that the X-ray tube 101 generates X-rays. In one embodiment, the high-voltage generator 109 is mounted on the frame 102. X-rays are radiated toward the subject S, a sectional area of which is expressed by a circle. The X-ray detector 103 is located on a side opposite to the X-ray tube 101 behind the subject S so as to detect radiated X-rays which have been transmitted through the subject S.

Referring further to FIG. 1, the X-ray CT apparatus or scanner further includes another processor for processing detected signals from the X-ray detector 103. A data acquisition circuit or data acquisition system (DAS) 104 converts signals output from the X-ray detector 103 into voltage signals for respective channels, amplifies the voltage signals, and further converts the amplified signals into digital signals. The X-ray detector 103 and DAS 104 are configured to manipulate the TPPR (Total number of Projections Per Rotation).

The aforementioned data are transmitted to a pre-processing device 106 housed in a console outside the gantry 100 via a non-contact data transmitter 105. The pre-processing device 106 executes specific correction such as sensitivity correction for raw data. Next, a storage device 112 stores data which are also called projection data in a stage immediately before reconstruction processing and are generated as a result. The storage device 112 is connected to a system controller 110 together with a reconstruction processor 114, display unit 116, input unit 115, and scan plan support device 200 via a data/control bus. The scan plan support device 200 includes a function of supporting an imaging technician to make a scan plan.

One embodiment of this embodiment further includes various software modules and hardware components required to greatly reduce streak and/or noise components of a CT image using a predetermined filter. According to one aspect of this embodiment, a noise reduction processor 117 of the CT apparatus advantageously executes noise and/or streak reduction processing. In one embodiment, the noise reduction processor 117 is actively connected to other software modules and/or system components such as the storage unit 112, reconstruction processor 114, display unit 116, and input unit 115 via the data/control bus. On this point, in another embodiment of this embodiment, the noise reduction processor 117 does not always solely execute a noise reduction function and/or tasks related to that function. In addition, in an alternative embodiment of this embodiment, the noise reduction processor 117 is a part of another processor such as the reconstruction processor 114 as an option.

In general, projection data in CT are available after predetermined logarithmic conversion processing. In this logarithmic conversion processing, measured X-ray intensity signals, which are attenuated by a scanned subject, converted into line integration data. After that, a CT image is reconstructed from these line integration data by a known mathematical inversion method. In an exemplary embodiment of a noise/streak reduction system according to this embodiment, the noise reduction processor 117 converts projection data to revert them to original X-ray intensity data or photon count measurement values. In this case, the noise reduction processor 117 requires arbitrary information related to system calibration processing in the conversion step. Alternatively, the noise reduction processor 117 has a direct access to the measured X-ray intensity signals.

The noise reduction processor 117 decides a noise variance (V) of data after logarithmic conversion based on the X-ray intensity signal or photon count. In this embodiment, noise filter parameters are decided to uniform noise after the logarithmic conversion processing.

In order to understand the logarithmic conversion effect for measured data, a noise model is checked in association with variances before and after logarithmic conversion. A noise variance $Var_{BL}$ before logarithmic conversion (before-log) is estimated by a before-log noise model defined by:

$$Var_{\mathrm{BL}} = V_{\mathrm{e}} + WI \qquad (1)$$

where $Var_{BL}$ is a before-log all-noise variance, $V_e$ is an electronic noise variance, and I is an average count. W is a gain of the detector, and is a function of channels, segments, the data acquisition system (DAS), and/or collimation. On the other hand, a noise variance $Var_{AL}$ after logarithmic conversion (after-log) is estimated by an after-log noise model, which is defined by:

$$Var_{AL} = \frac{Var_{BL}}{I^2} \qquad (2)$$

Both of the above equations are disclosed in "Adaptive streak artifact reduction in CT resulting from excessive x-ray phone noise", Jiang Hsieh (GE), Med. Phys. 25(11), 2139 - 47, 1998.

After the noise variances are defined, an adaptive Gaussian filter is applied to the X-ray intensity data. An exemplary aspect of an adaptive Gaussian filter (G) is defined by:

$$G_{\sigma} = \frac{1}{\sqrt{2\pi}\sigma_G} exp\left(-\frac{x^2}{2\sigma_G^2}\right) \qquad (3)$$

where a standard deviation (SD) $\sigma_G$ decides an effective kernel size, and x is a distance between an arbitrary position and central position in a kernel. A key of satisfactory application of adaptive Gaussian filtering is to decide a value of noise SD $\sigma_G$ as a function of local characteristics of data or noise. In an embodiment of a noise and/or streak reduction processor according to this embodiment, a kernel variance $V_G$ (or $\sigma^2_G$) is adaptively decided as a function f of the noise variable $Var_{AL}$, as defined by:

$$V_G = f\left(Var_{AL}\right) \qquad (4)$$

Specific implementation examples of the noise and/or streak reduction processor according to this embodiment in association with the aforementioned general equations will be further explained. One exemplary function of equation (4) is defined by equation (5) below, but this example does not limit other implementation examples of this embodiment.

$$V_G = K\left(Var_{AL}\right)^P \qquad (5)$$

where K is a parameter required to control a filtering strength. In one embodiment, K is set to be 1. In another embodiment, the parameter K is decided depending on the types of application, and the value of the parameter K assumes an arbitrary absolute value. In addition, another parameter P is a power or exponential parameter including a typical range from 0 to 2. In one embodiment, the P value is 0.5. In another embodiment for an appropriate application example, other P values such as P = 1 can be arbitrarily selected.

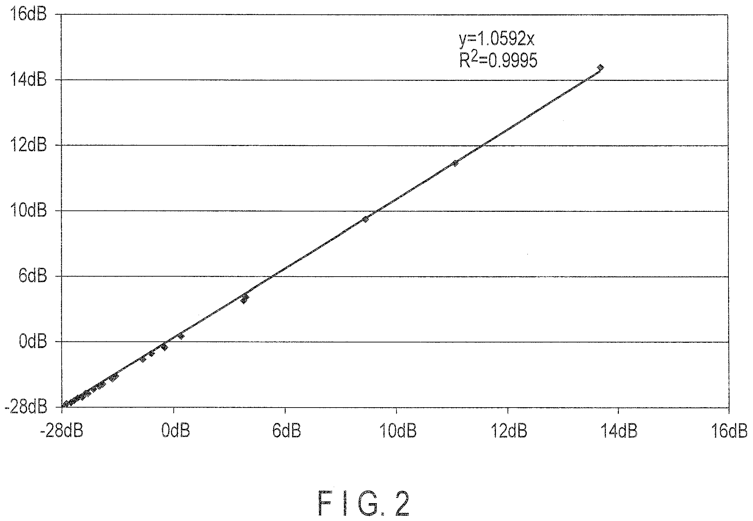

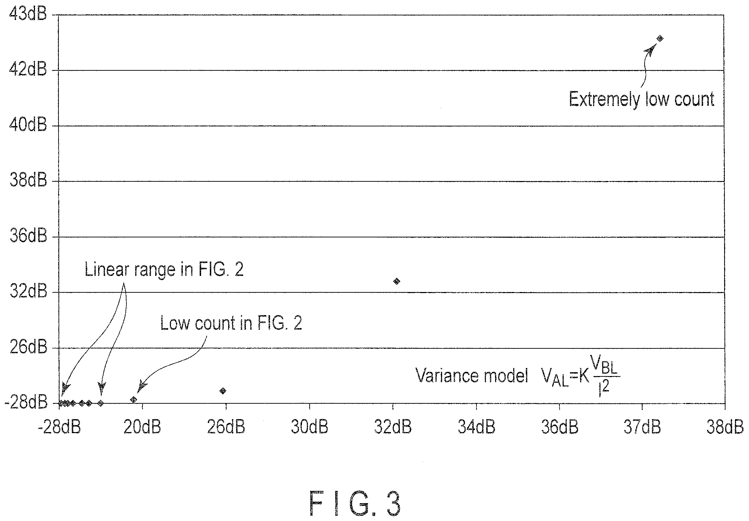

FIG. 2 shows the relationship between photon counts and measured variances in association with the after-log noise model given by equation (2). The after-log noise model indicated by a line closely expresses true after-log variance values when a count is 44 or more (it should be noted that Ve is about 30 to 40). On the other hand, as shown in FIG. 3, when a count is decreased and falls below 44 (that is, it is decreased to a lower limit of electronic noise), measured variances become very nonlinear in association with the after-log noise model. That is, the after-log noise model is not accurate when a count is small. Since a variance becomes large for a small count, when after-log data is used in noise variance decision, it is necessary to decrease a variance for a small count. A variance is represented by a relative variance value, which is expressed in decibels (dB) based on an arbitrarily selected large value.

In an embodiment of the noise and/or streak reduction processor according to this embodiment, a noise variance is estimated based on after-log projection data, and a filter is generated based on after-log variances. After that, the aforementioned filter is applied to measured data or X-ray intensity data before logarithmic conversion. Finally, after the filtered X-ray intensity data are converted to be reverted to a projection data (that is, line integration) domain, a CT image is reconstructed by this embodiment. For this reason, the following exemplary filter generation method will be described using a Gaussian filter.

The first filter generation method assumes that noise at count $I_0$ is allowable, and a desired variance level $Var_0$ is defined by:

$$Var_0 = (Ve_0 + W_0\ I_0) / I_0^2 \qquad (6)$$

where $Ve_0$ and $W_0$ are respectively an average value of electronic noise variances and a gain of the detector.

Then, a variance is reduced by low-pass filtering. That is, the after-log variance $Var_{AL}$ is reduced at a given ratio VRR to a filtered variance $Var_F$, which is defined by:

$$Var_F = Var_{AL}\ VRR \qquad (7)$$

In equation (7), when the filtered variance $Var_F$ is equal to or lower than the desired variance level $Var_0$ ($Var_F \le Var_0$), the desired reduction ratio VRR is decided by:

$$VRR = Var_0 / Var_{AL} = Var_0\ I^2 / Var_{BL} \qquad (8)$$

where $Var_{BL}$ is a before-log all-noise variance, $Var_{AL}$ is an after-log all-noise variance, and I is an average count.

Assume that the aforementioned low-pass filter is given by a predetermined set of coefficients $\{c_k\}$. In this case, k = 1,..., N, $c_k > 0$, and $\Sigma_k c_k = 1$. In association with the aforementioned coefficients, the desired reduction ratio VRR is defined by:

$$VRR = \Sigma_k c_k^2. \qquad (9)$$

In addition, the coefficients $\{c_k\}$ correspond to an N-dimensional Gaussian filter as an option, and its filter variance $V_G$ is defined by:

$$\Sigma_k c_k^2 = 1/(4\pi V_G)^{N/2}. \qquad (10)$$

From equations (8) to (10), in case of a dimension N, the variance $V_G$ of the Gaussian filter is estimated by:

$$1/(4\pi V_G)^{N/2} = Var_0\ I^2 / Var_{BL}. \qquad (11A)$$

$$V_G = 1/(4\pi)\ (Var_{BL} / (Var_0\ Mean^2))^{2/N} \qquad (11B)$$

The variance $V_G$ of the Gaussian filter is simplified based on equation (11B) to be expressed by equation (11C) using two variables VarScale and VarPower. In practice, equation (11C) is equal to equation (5), and the parameters K and P in equation (5) respectively correspond to VarScale and VarPower in equation (11C). In this specification, the parameters K and P in equation (5) and VarScale and VarPower in equation (11C) are exchangeable. According to the first filter generation method, equation (11C) defines the variance $V_G$ of the Gaussian filter.

$$V_G = \text{VarScale} \quad \text{Var}_{AL}^{\text{VarPower}} \qquad \qquad \textbf{(11C)}$$

where $\text{Var}_{AL}$ is already defined by equation (2). Finally, the variance $V_G$ of the Gaussian filter is decided from the after-log noise variance $\text{Var}_{AL}$ using the two variables VarScale (scale variance) and VarPower. The variable VarScale is defined by equation (12) associated with $\text{Var}_0$, which is previously defined by equation (6). According to the first filter generation method, equation (12) defines the variable VarScale.

$$\text{VarScale} = 1/(4\pi) \quad (1 / \text{Var}_0)^{2/N} \qquad \qquad \textbf{(12)}$$

On the other hand, the other variable VarPower is defined by equation (13), and its value is easily decided for a 2D filter, 3D filter, and 4D filter in embodiments of the noise and/or streak reduction processor according to this embodiment. According to the first filter generation method, equation (13) defines the variable VarPower.

$$\text{VarPower} = 2/N \qquad \qquad \textbf{(13)}$$
$$= 1 \text{ for 2D Gaussian filters}$$
$$= 2/3 = 0.67 \text{ for 3D Gaussian filters}$$
$$= \tfrac{1}{2} \text{ for 4D Gaussian filters}$$

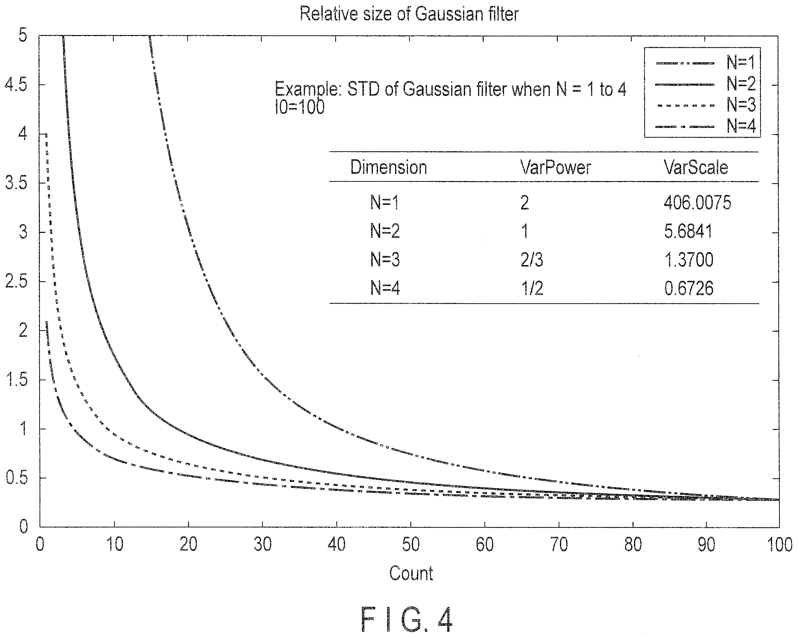

Next, referring to FIG. 4, the graph shows the relationship between counts and effective filter sizes of Gaussian filters associated with a dimension N, VarScale, and VarPower required when a predetermined Gaussian filter is used. At specific values within a range from 1 to 4 of the dimension N, the value VarPower ranges from 2 to 0.5. On the other hand, the value VarScale has a broader range from 406.0075 to 0.6726. As shown in FIG. 4, when N = 4, a variance is constant over the broadest count range. On the other hand, when N = 1, a variance is constant within the narrowest count range. In order to practice this embodiment, in another embodiment, the VarPower and VarScale ranges are not limited to the value ranges disclosed above. In practice, according to another specific aspect of this embodiment, VarPower optionally ranges from 1 to 10000, but VarPower optionally ranges from 0.2 to 1.

As described above, in the embodiment of the noise and/or streak reduction processor according to this embodiment, noise variances are estimated based on after-log projection data, and a filter is generated based on after-log variances. After that, the aforementioned filter is applied to measured data or X-ray intensity data before logarithmic conversion. Finally, after the filtered X-ray intensity data are converted to be reverted to a projection data (that is, line integration) domain, a CT image is reconstructed by this embodiment. As a result of the filter application, log-converted projection data have substantially uniform variances.

In general, all variances in measured data depend on Poisson and Gaussian noise components. It is ideal that count data from the detector follow a Poisson distribution, but real data are mixed with electronic noise components which are guided by the data acquisition system (DAS) circuit and have a Gaussian distribution. In a reconstructed image, streak components and unacceptable noise components are generated at small count data, and electronic noise components are not negligible any more at a small count. Therefore, an accurate noise model has to consider both Poisson and Gaussian noise components.

Equations (11A), (11B), and (11C) assume an infinite Gaussian kernel. In practice, a Gaussian kernel is limited to a finite mask (for example, 5 × 7). In another embodiment of the noise and/or streak reduction processor such as the noise reduction processor 117, equation (14) defines one means required to decide discrete Gaussian filtering respectively for measured data values. That is, a discrete kernel of a filter for a specific detector element (i) is defined by:

$$I_{i_0}^G = \frac{\sum_i I_i\, exp\left(-\frac{\Delta x_i^2}{2V_{i_0}}\right) exp\left(-\frac{\left(I_{i_0} - I_i\right)^2}{2V_R}\right)}{\sum_i exp\left(-\frac{\Delta x_i^2}{2V_{i_0}}\right) exp\left(-\frac{\left(I_{i_0} - I_i\right)^2}{2V_R}\right)} \qquad (14)$$

where $\Delta x_i$ is a distance between an i-th pixel and a predetermined reference pixel $i_0$ in a one-dimensional (1D) detector, and $Vi_0$ is a frequency response of a filter at the reference pixel $i_0$. $V_R$ is a parameter of the filter.

Based on the same token, the noise reduction processor 117 decides discrete Gaussian filtering for each of data values measured by a two-dimensional (2D) detector. That is, a discrete kernel of a filter for a specific detector element (i, j) is defined by:

$$I_{(i_0,j_0)}^G = \frac{\sum_{i,j} I_{i,j}\, exp\left(-\frac{\Delta x_{i,j}^2}{2V_{i_0,j_0}}\right) exp\left(-\frac{\left(I_{i_0,j_0} - I_{i,j}\right)^2}{2V_R}\right)}{\sum_{i,j} exp\left(-\frac{\Delta x_{i,j}^2}{2V_{i_0,j_0}}\right) exp\left(-\frac{\left(I_{i_0,j_0} - I_{i,j}\right)^2}{2V_R}\right)} \qquad (15)$$

where $\Delta x_{i,j}$ is a distance between an (i-th, j-th) pixel and a predetermined reference pixel $(i_0, j_0)$ in the 2D filter, and $V_{i0,j0}$ is a frequency response of a filter at the reference pixel $(i_0, j_0)$. $V_R$ is a parameter of the filter.

Contrary to the attempts in the related art, an embodiment of the noise and/or streak reduction processor according to this embodiment estimates noise variances based on noise characteristics of after-log projection data, and the filter is generated based on the estimated after-log variances. After that, the aforementioned filter is applied to original measured data or X-ray intensity data before logarithmic conversion. Finally, the filtered X-ray intensity data are converted to be reverted to a projection data (that is, line integration) domain, and a CT image is then reconstructed by this embodiment.

In a specific embodiment, the aforementioned step of substantially minimizing noise and/or streak components is optionally repeated several times so as to achieve a desired noise reduction effect. In these embodiments, the parameters p and K optionally change for a desired solution. In addition, the parameters p and K change every time repetition processing is executed optionally.

In order to decide clinically useful values of the parameters K and P in equation (5) or VarScale and VarPower in equation (11C) in the aforementioned noise and/or streak reduction processing, an optimal noise filter is generated as IR (Iterative Reconstruction) noise model filtering. In general, a role of pure raw data filtering is to remove the influence of electronic noise or insufficient photons. Since row data with low values are not reliable as a result of logarithmic conversion, low statistic weights are assigned to these data. Therefore, pure raw data filtering and statistic weighting are complemented with each other. For these reason, an embodiment of the noise and/or streak reduction processor according to this embodiment does not require any powerful data filtering such as image regularization based on TV (total variation) or AWAD (Adaptive Weighted Anisotropic Diffusion). To summarize this, the IR noise model filtering is improved using weak filtering parameters, thus maintaining a spatial resolution of low-dose data.

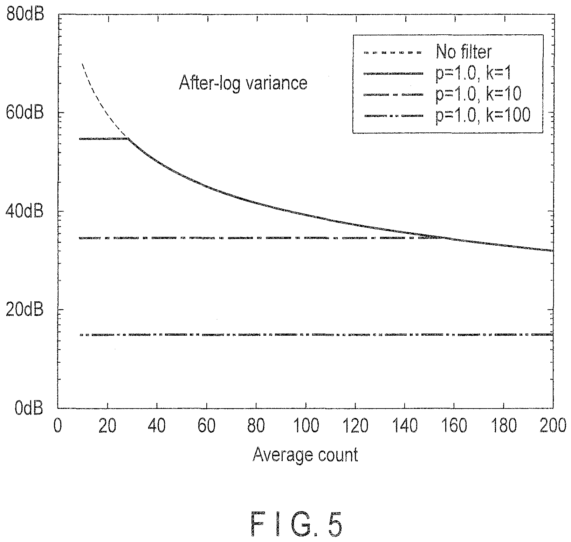

Other variations of parameters will be described using the following example. Next, referring to FIG. 5, the graph shows the relationship between average counts and after-log variances in one embodiment of the noise and/or streak reduction processor using the predetermined filter according to this embodiment. Under the assumption of an infinite Gaussian kernel, the parameter K in equation (5) or VarScale in equation (11C) is adjusted to 1, 10, and 100, but the parameter P in equation (5) or VarPower in equation (11C) is fixed to be 1. As can be seen from FIG. 5, when no filter is used, no noise uniforming effect can be obtained in after-log variances in an average count region. Also, as can be seen from FIG. 5, when k = 1, a slight noise uniforming effect can be obtained in after-log variances within a small, low average count region of less than 30. Furthermore, as can be seen from FIG. 5, when k = 10, a large noise uniforming effect can be obtained in after-log variances over a broad average count region of less than 160. Finally, when k = 100, a large noise uniforming effect can be obtained in after-log variances over a whole average count region of less than 200. A variance is indicated by a relative variance value expressed in decibels (dB) based on an arbitrarily selected large value.

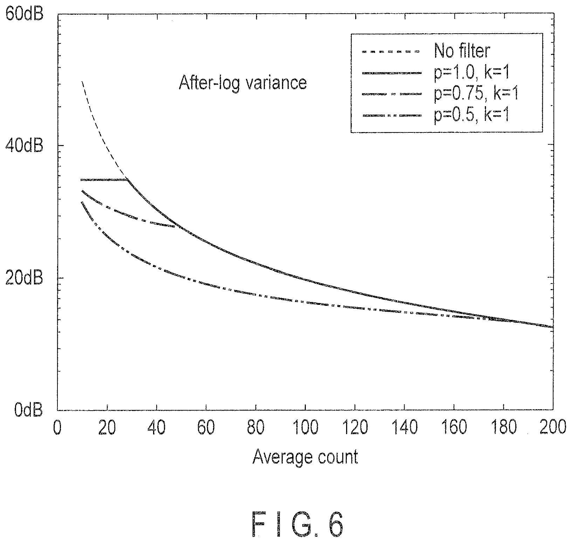

Next, referring to FIG. 6, the graph shows the relationship between average counts and after-log variances in one embodiment of the noise and/or streak reduction processor using the predetermined filter according to this embodiment. Under the assumption of an infinite Gaussian kernel, the parameter P in equation (5) or VarPower in equation (11C) is adjusted to 1, 0.75, and 0.5, but the parameter K in equation (5) or VarScale in equation (11C) is fixed to be 1. As can be seen from FIG. 6, when no filter is used, no noise uniforming effect can be obtained in after-log variances in an average count region. Also, as can be seen from FIG. 6, when P = 1, a slight noise uniforming effect can be obtained in after-log variances within a small, low average count region of less than 30. Furthermore, as can be seen from FIG. 6, when P = 0.75, a certain noise uniforming effect can be obtained in after-log variances over a relatively broad average count region of less than 50. With this uniforming effect, a perfectly flat, uniformed region cannot be achieved. Finally, as can be seen from FIG. 6, when P = 0.5, a large noise uniforming effect can be obtained in after-log variances over a considerably broad average count region of less than 200. As can be seen from FIG. 6, the noise uniforming effect is conspicuous in an average count region from 60 to 200. A variance is indicated by a relative variance value expressed in decibels (dB) based on an arbitrarily selected large value.

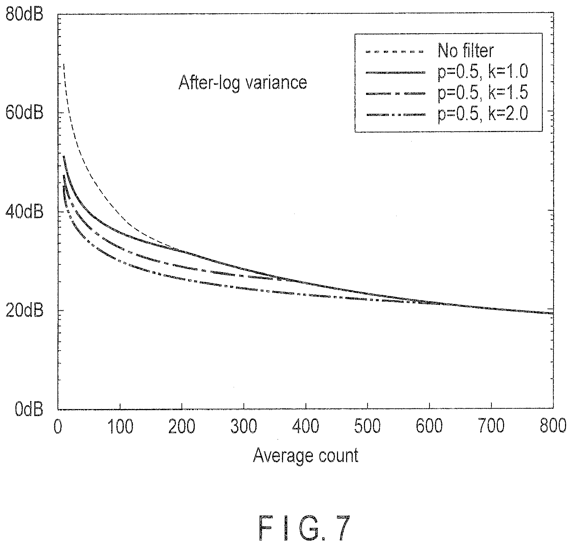

Next, referring to FIG. 7, the graph shows the relationship between average counts and after-log variances in one embodiment of the noise and/or streak reduction processor using the predetermined filter according to this embodiment. Under the assumption of an infinite Gaussian kernel, the parameter K in equation (5) or VarScale in equation (11C) is adjusted to 1, 1.5, and 2, but the parameter P in equation (5) or VarPower in equation (11C) is fixed to be 0.5. As can be seen from FIG. 7, when no filter is used, no noise uniforming effect can be obtained in after-log variances in an average count region. Also, as can be seen from FIG. 7, when K = 1, a slight noise uniforming effect can be obtained in after-log variances within a small, low average count region of less than 180. Furthermore, as can be seen from FIG. 7, when K = 1.5, a certain noise uniforming effect can be obtained in after-log variances over a relatively broad average count region of less than 380. Finally, when K = 2.0, a noise uniforming effect can be obtained in after-log variances over a broad average count region of less than 800. A variance is indicated by a relative variance value expressed in decibels (dB) based on an arbitrarily selected large value.

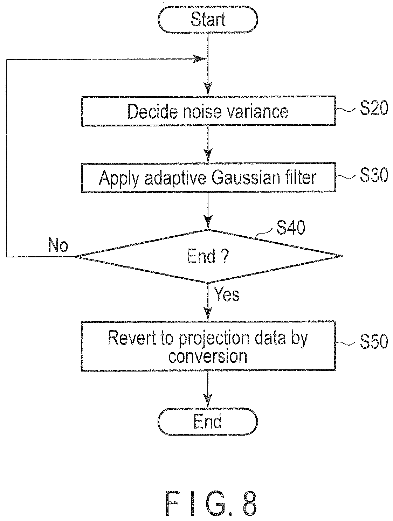

Next, referring to FIG. 8, steps involved in one exemplary processing for greatly reducing noise and/or streak components of data measured before reconstruction of a CT image by this embodiment will be described. In general, projection data in CT are available after predetermined logarithmic conversion processing. In this logarithmic conversion processing, measured X-ray intensity signals, which are attenuated by a scanned subject, are converted into line integration data. After that, a CT image is reconstructed from these line integration data by a known mathematical inversion method.

In an exemplary embodiment of the noise/streak reduction processing according to this embodiment, the following steps are executed by a predetermined combination of software and hardware modules. An embodiment of this processing is not limited to any specific software module or hardware module.

In step S20, a noise variance (V) of measurement data is decided based on an X-ray intensity signal or photon count by noise reduction processing. This noise variance is calculated to uniform noise components after logarithmic conversion processing. An after-log noise variance $Var_{AL}$ is decided by the noise model defined by equation (2) above which takes a measured X-ray intensity or photon count I and electronic noise Ve of the data acquisition system and the like into consideration based on equation (1).

After the after-log noise variance $Var_{AL}$ is decided in step S20, an adaptive Gaussian filter is applied in step S30 to X-ray intensity data obtained from step S10. An exemplary aspect of the adaptive Gaussian filter (G) is defined by equation (3) above. The adaptive Gaussian filter depends on a standard deviation $\sigma$ which decides an effective kernel size and a distance x between an arbitrary position and central position in the kernel. The adaptive Gaussian filtering is normally applied to noise SD $\sigma$ value as a function of data or noise local characteristics. In exemplary processing for greatly reducing noise and/or streak components by this embodiment, a variance $V_G$ (or $\sigma^2_G$) of a kernel is adaptively decided as a function f of the noise variance $Var_{AL}$ defined by equation (4) above. A specific embodiment of the noise and/or streak reduction processing requires the parameter K used to control the filtering strength. In one embodiment, K is set to be 1. In another embodiment, the parameter K is decided depending on an application type, and the value of the parameter K has the number of digits as an option. In addition, a specific embodiment of the noise and/or streak reduction processing also requires the second parameter P as a power or exponential parameter including a typical range from 0 to 2. In one processing, the value of the exponent P is 0.5. In another processing for an appropriate application example, another P value (for example, P = 1) is used as an option. The aforementioned parameters K and P can be exchanged by VarScale and VarPower in equation (11C) above in exemplary processing for greatly reducing noise and streak components by this embodiment.

In details of another embodiment of step S30, one means for deciding discrete Gaussian filtering for each of measured data values is defined for a specific one-dimensional (1D) detector element (i) by equation (14) above. Likewise, one means for deciding discrete Gaussian filtering for each of measured data values is defined for a specific two-dimensional (2D) detector element (i, j) by equation (15) above. In step S30, discrete Gaussian kernels are generated respectively for measured data, and are applied to these data. Contrary to the attempts of the related art, the aforementioned exemplary processing for greatly reducing noise and/or streak components by this embodiment estimates noise variances based on noise characteristics of after-log projection data, and the filter is generated based on the estimated after-log variances. After that, the aforementioned filter is applied to original measured data or X-ray intensity data before logarithmic conversion in step S30.

As an option, in a specific application example in the exemplary processing according to this embodiment, steps S20 and S30 are repeated. Since these steps are repeated as an option, whether or not the exemplary processing returns to step S20 is decided in step S40. If it is decided in step S40 that the filter is to be repetitively applied, the exemplary processing is repeated from step S20. On the other hand, if it is decided in step S40 that the filter is not repetitively applied or the repetition is complete, the exemplary processing advances to step S50. Finally, in step S50, the aforementioned filtered X-ray intensity data are converted to be reverted to a projection data (that is, line integration) domain, and a CT image is then reconstructed by this embodiment.

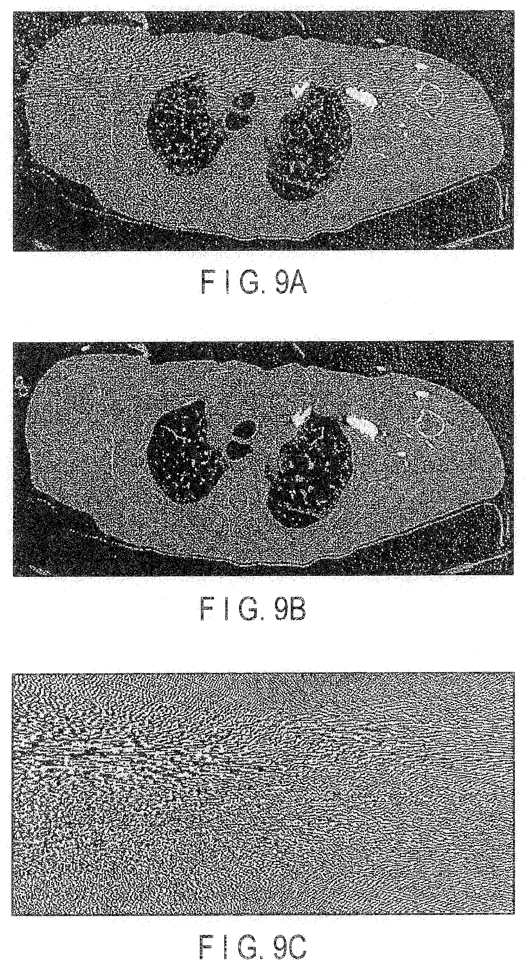

Next, referring to FIGS. 9A, 9B, and 9C, shoulder images exhibit clinically significant improvements as an application result of the adaptive Gaussian filter according to this embodiment. A DAS electronic noise variance Ve is decided from actual scan data acquired without rotating the X-ray tube. One and only filter parameter is K, which was set to be 1 in all test cases of FIGS. 9A, 9B, and 9C. In addition, the images shown in FIGS. 9A, 9B, and 9C were acquired using 160 arrays of detectors at 120 kV and 195 mAs and at +65.9 mm/rotation bed speed. FIG. 9A shows a reconstructed image, a data region of which is not filtered by the adaptive Gaussian filter according to this embodiment. FIG. 9B shows a reconstructed image, a data region of which is filtered by the adaptive Gaussian filter according to this embodiment. FIG. 9B shows that streak and noise components are greatly suppressed by the adaptive Gaussian filter according to this embodiment. In other words, in FIG. 9A, clinically related information is interrupted and/or made unclear due to streak and noise components. On the other hand, in FIG. 9B, the clinically related information is extracted. Finally, FIG. 9C shows a difference image which shows structural information without nearly no losses.

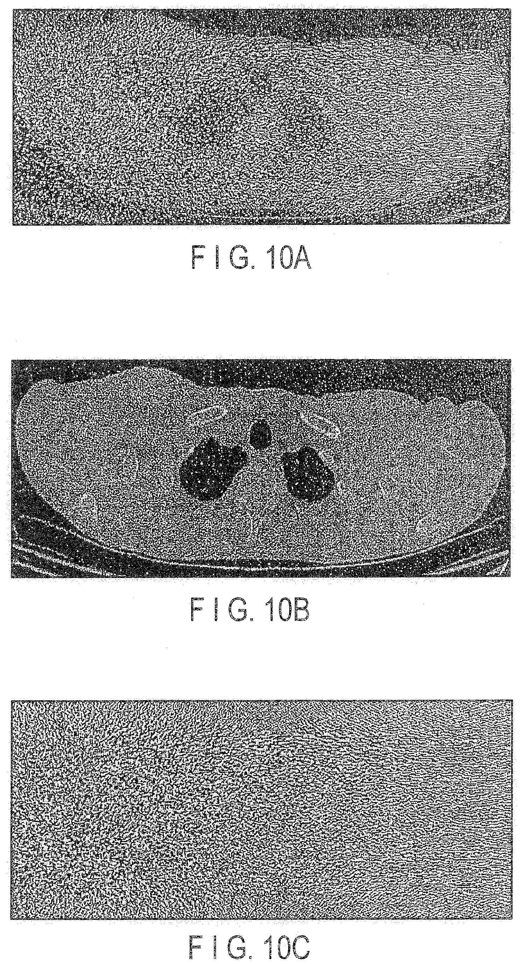

Next, referring to FIGS. 10A, 10B, and 10C, other shoulder images exhibit clinically significant improvements as an application result of the adaptive Gaussian filter according to this embodiment. Quality improvements nearly match in all cases. A DAS electronic noise variance Ve is decided from actual scan data acquired without rotating the X-ray tube. One and only filter parameter is K, which was set to be 1 in all test cases of FIGS. 10A, 10B, and 10C. In addition, these images were acquired using 64 arrays of detectors at 120 kV and 30 mAs and at +47.5 mm/rotation bed speed. FIG. 10A shows a reconstructed image, a data region of which is not filtered by the adaptive Gaussian filter according to this embodiment. FIG. 10B shows a reconstructed image, a data region of which is filtered by the adaptive Gaussian filter according to this embodiment. FIG. 10B shows that streak and noise components are greatly suppressed by the adaptive Gaussian filter according to this embodiment. In other words, in FIG. 10A, clinically related information is interrupted and/or made unclear due to streak and noise components. On the other hand, in FIG. 10B, the clinically related information is extracted. Finally, FIG. 10C shows a difference image which shows structural information without nearly no losses.

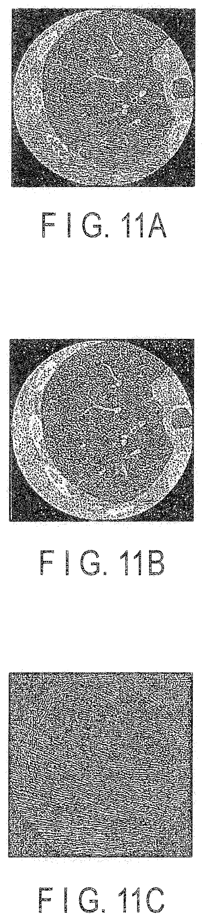

Next, referring to FIGS. 11A, 11B, and 11C, images are zoomed reconstructed images, which are displayed on a lung window although they are based on the same data as in FIGS. 10A, 10B, and 10C. As is clearly understood in FIG. 11B, streak components are greatly removed without apparently deteriorating a resolution of lung tissues. In FIG. 11B, a cloud-like contamination is clearly observed. However, this contamination is unclear in FIG. 11A. A certain blooming effect is observed on ribs. This effect is often induced by an extremely low observation window level (-700 HU) as a lowermost end of an increase in bone strength. FIG. 11C as a difference image does not include any apparent structural information except for dark signs of blood vessels in a portion slightly above the center.

Some embodiments of the present invention have been described, but they are presented as examples. These embodiments can be practiced in various other aspects, and various omissions, replacements, and changes can be made without departing from the scope of the invention as defined by the appended claims.

**Claims**

1. A computer implemented noise reduction method for a X-ray computed tomography system **characterized in that** the method comprises:

   using a data acquisition system (104) to convert signals output from an X-ray detector (103) of the X-ray computed tomography system into voltage signals, said data acquisition system amplifying the voltage signals and converting the amplified signals into digital measurement signals;
   estimating a noise variance for each digital measurement signal based on a predetermined noise model, wherein the noise variance is estimated for each digital measurement signal after logarithmic conversion processing, wherein the predetermined noise model is defined by an average value of the digital measurement signals and a known electric noise value and wherein the estimated variance of the predetermined noise-model is

$$\frac{1+V_e/I}{I},$$

where I is the average value of the digital measurement signals while $V_e$ is the known electric noise value; generating a discrete filter kernel of a noise-equalizing Gaussian filter for each of the digital measurement signals based on the estimated noise variance; and

applying the discrete filter kernel to a corresponding one of the digital measurement signals to generate filtered measurement signals wherein the discrete filter kernel is applied to digital measurement signals prior to logarithmic conversion processing, wherein the discrete filter kernel has a kernel size determined based on a standard deviation obtained from a kernel variance adaptively decided based on the noise variance.

2. The method of claim 1, wherein the discrete filter kernel $I^G_{i0}$ of the noise-equalizing filter for a particular detector element (i) in a detector required to generate the digital measurement signal is defined by:

$$I^G_{i_0} = \frac{\sum_i I_i \exp\left(-\frac{\Delta x_i^2}{2V_{i_0}}\right)\exp\left(-\frac{\left(I_{i_0}-I_i\right)^2}{2V_R}\right)}{\sum_i \exp\left(-\frac{\Delta x_i^2}{2V_{i_0}}\right)\exp\left(-\frac{\left(I_{i_0}-I_i\right)^2}{2V_R}\right)}$$

where $\Delta x_i$ is a distance between an i-th pixel and a predetermined reference pixel $i_0$ in a one-dimensional image, $Vi_0$ is a frequency response of the noise-equalizing filter at the predetermined reference pixel $i_0$, and $V_R$ is a parameter of the noise-equalizing filter.

3. The method of claim 1, wherein the discrete filter kernel $I^G_{(i0, j0)}$ of the noise-equalizing filter for a particular detector element (i, j) in a detector required to generate the digital measurement signal is defined by:

$$I^G_{(i_0,j_0)} = \frac{\sum_{i,j} I_{i,j} \exp\left(-\frac{\Delta x_{i,j}^2}{2V_{i_0,j_0}}\right)\exp\left(-\frac{\left(I_{i_0,j_0}-I_{i,j}\right)^2}{2V_R}\right)}{\sum_{i,j} \exp\left(-\frac{\Delta x_{i,j}^2}{2V_{i_0,j_0}}\right)\exp\left(-\frac{\left(I_{i_0,j_0}-I_{i,j}\right)^2}{2V_R}\right)}$$

where $\Delta x_{i,j}$ is a distance between an (i-th, j-th) pixel and a predetermined reference pixel $(i_0, j_0)$ in a two-dimensional image, $V_{i0,j0}$ is a frequency response of the noise-equalizing filter at the predetermined reference pixel $(i_0, j_0)$, and $V_R$ is a parameter of the noise-equalizing filter.

4. The method of claim 1, wherein estimating the variance, generating the discrete filter kernel, and applying the discrete filter kernel to the corresponding one of the digital measurement signals are repeated.

**Patentansprüche**

1. Computerimplementiertes Rauschverringerungsverfahren für ein Röntgenstrahl-Computertomographiesystem, **dadurch gekennzeichnet, dass** das Verfahren umfasst:

Verwenden eines Datenerfassungssystems (104), um Signale, welche von einem Röntgenstrahldetektor (103) des Röntgenstrahl-Computertomographiesystems ausgegeben werden, in Spannungssignale umzuwandeln, wobei das Datenerfassungssystem die Spannungssignale verstärkt und die verstärkten Signale in digitale Messsignale umwandelt;
Schätzen einer Rauschvarianz für jedes digitale Messsignal basierend auf einem vorbestimmten Rauschmodell, wobei die Rauschvarianz für jedes digitale Messsignal nach einer logarithmischen Umwandlungsverarbeitung geschätzt wird, wobei das vorbestimmte Rauschmodell durch einen Mittelwert der digitalen Messsignale und einen bekannten elektrischen Rauschwert definiert wird und wobei die geschätzte Varianz des vorbestimmten Rauschmodells folgende ist:

$$\frac{1+V_e/I}{I},$$

wobei I der Mittelwert der digitalen Messsignale ist während $V_e$ der bekannte elektrische Rauschwert ist; Erzeugen eines diskreten Filterkerns eines rauschgleichsetzenden Gaußfilters für jedes der digitalen Messsignale basierend auf der geschätzten Rauschvarianz; und

Anwenden des diskreten Filterkerns auf einen entsprechenden der digitalen Messsignale, um gefilterte Messsignale zu erzeugen, wobei der diskrete Filterkern auf digitale Messsignale vor der logarithmischen Umwandlungsverarbeitung angewendet wird, wobei der diskrete Filterkern eine Kerngröße aufweist, welche basierend auf einer Standardabweichung bestimmt wird, welche aus einer Kernvarianz erhalten wird, welche basierend auf der Rauschvarianz adaptiv entschieden wird.

2. Verfahren nach Anspruch 1, wobei der diskrete Filterkern $I^G_{i_0}$ des rauschgleichsetzenden Filters für ein besonderes Detektorelement (i) in einem Detektor, welcher zum Erzeugen des digitalen Messsignals notwendig ist, wie folgt definiert ist:

$$I^G_{i_0} = \frac{\sum_i I_i \exp\left(-\frac{\Delta x_i^2}{2V_{i_0}}\right)\exp\left(-\frac{\left(I_{i_0}-I_i\right)^2}{2V_R}\right)}{\sum_i \exp\left(-\frac{\Delta x_i^2}{2V_{i_0}}\right)\exp\left(-\frac{\left(I_{i_0}-I_i\right)^2}{2V_R}\right)}$$

wobei $\Delta x_i$ ein Abstand zwischen einem i-ten Pixel und einem vorbestimmten Referenzpixel $i_0$ in einem eindimensionalen Bild ist, $V_{i_0}$ ein Frequenzgang des rauschgleichsetzenden Filters in dem vorbestimmten Referenzpixel $i_0$ ist und $V_R$ ein Parameter des rauschgleichsetzenden Filters ist.

3. Verfahren nach Anspruch 1, wobei der diskrete Filterkern $I^G_{(i0,\,j0)}$ des rauschgleichsetzenden Filters für ein besonderes Detektorelement (i, j) in einem Detektor, welcher zum Erzeugen des digitalen Messsignals notwendig ist, wie folgt definiert ist:

$$I^G_{(i_0,j_0)} = \frac{\sum_{i,j} I_{i,j} \exp\left(-\frac{\Delta x_{i,j}^2}{2V_{i_0,j_0}}\right)\exp\left(-\frac{\left(I_{i_0,j_0}-I_{i,j}\right)^2}{2V_R}\right)}{\sum_{i,j} \exp\left(-\frac{\Delta x_{i,j}^2}{2V_{i_0,j_0}}\right)\exp\left(-\frac{\left(I_{i_0,j_0}-I_{i,j}\right)^2}{2V_R}\right)}$$

wobei $\Delta x_i$ ein Abstand zwischen einem (i-ten, j-ten) Pixel und einem vorbestimmten Referenzpixel $(i_0,j_0)$ in einem zweidimensionalen Bild ist, $V_{i_0,j_0}$ ein Frequenzgang des rauschgleichsetzenden Filters in dem vorbestimmten Referenzpixel $(i_0,j_0)$ ist und $V_R$ ein Parameter des rauschgleichsetzenden Filters ist.

4. Verfahren nach Anspruch 1, wobei das Schätzen der Varianz, das Erzeugen des diskreten Filterkerns und das Anwenden des diskreten Filterkerns auf den entsprechenden der digitalen Messsignale wiederholt werden.

**Revendications**

1. Procédé de réduction du bruit mise en œuvre sur ordinateur pour un système de tomodensitométrie à rayons X **caractérisé en ce que** le procédé comprend :

l'utilisation d'un système d'acquisition de données (104) pour convertir des signaux émis par un détecteur de rayons X (103) du système de tomodensitométrie à rayons X en signaux de tension, ledit système d'acquisition de données amplifiant les signaux de tension et convertissant les signaux amplifiés en signaux de mesure numériques ;
l'estimation d'une variance de bruit pour chaque signal de mesure numérique sur la base d'un modèle de bruit prédéterminé, dans lequel la variance de bruit est estimée pour chaque signal de mesure numérique après un traitement de conversion logarithmique, dans lequel le modèle de bruit prédéterminé est défini par une valeur moyenne des signaux de mesure numériques et une valeur de bruit électrique connue et dans lequel la variance estimée du modèle de bruit prédéterminé est

$$\frac{1+V_e/I}{I},$$

où I est la valeur moyenne des signaux de mesure numérique tandis que $V_e$ est la valeur de bruit électrique connue ;
la génération d'un noyau de filtre discret d'un filtre Gaussien à égalisation de bruit pour chacun des signaux de mesure numériques sur la base de la variance de bruit estimée ; et
l'application du noyau de filtre discret à un signal correspondant des signaux de mesure numériques afin de générer des signaux de mesure filtrés dans lequel le noyau de filtre discret est appliqué à des signaux de mesure numériques avant le traitement de conversion logarithmique, dans lequel le noyau de filtre discret présente une taille de noyau déterminée sur la base d'un écart type obtenu à partir d'une variance de noyau décidée de manière adaptative sur la base de la variance de bruit.

2. Procédé selon la revendication 1, dans lequel le noyau de filtre discret $I^G_{i_0}$ du filtre d'égalisation de bruit pour un élément détecteur particulier (i) dans un détecteur requis afin de générer le signal de mesure numérique est défini par :

$$I^G_{i_0} = \frac{\sum_i I_i \exp\left(-\frac{\Delta x_i^2}{2V_{i_0}}\right)\exp\left(-\frac{\left(I_{i_0}-I_i\right)^2}{2V_R}\right)}{\sum_i \exp\left(-\frac{\Delta x_i^2}{2V_{i_0}}\right)\exp\left(-\frac{\left(I_{i_0}-I_i\right)^2}{2V_R}\right)}$$

où $\Delta x_i$ est une distance entre un $i^{\text{ème}}$ pixel et un pixel de référence prédéterminé $i_0$ dans une image monodimensionnelle, $Vi_0$ est une réponse en fréquence du filtre égaliseur de bruit au pixel de référence prédéterminé $i_0$, et $V_R$ est un paramètre du filtre égaliseur de bruit.

3. Procédé selon la revendication 1, dans lequel le noyau de filtre discret $I^G_{(i0,\,j0)}$ du filtre égaliseur de bruit pour un élément détecteur particulier (i, j) dans un détecteur requis afin de générer le signal de mesure numérique est défini par :

$$I^G_{(i_0,j_0)} = \frac{\sum_{i,j} I_{i,j} \exp\left(-\frac{\Delta x_{i,j}^2}{2V_{i_0,j_0}}\right)\exp\left(-\frac{\left(I_{i_0,j_0}-I_{i,j}\right)^2}{2V_R}\right)}{\sum_{i,j} \exp\left(-\frac{\Delta x_{i,j}^2}{2V_{i_0,j_0}}\right)\exp\left(-\frac{\left(I_{i_0,j_0}-I_{i,j}\right)^2}{2V_R}\right)}$$

où $\Delta xi,j$ est une distance entre un ($i^{\text{ème}}$, $j^{\text{ème}}$) pixel et un pixel de référence prédéterminé ($i_0$, $j_0$) dans une image en deux dimensions, $V_{i0,j0}$ est une réponse en fréquence du filtre égalisateur de bruit au pixel de référence prédéterminé ($i_0$, $j_0$), et $V_R$ est un paramètre du filtre égalisateur de bruit.

4. Procédé selon la revendication 1, dans lequel l'estimation de la variance, la génération du noyau de filtre discret, et l'application du noyau de filtre discret au signal correspondant des signaux de mesure numérique sont répétées.

FIG. 1

F I G. 2

EP 2 533 197 B1

43dB

42dB

40dB

38dB

36dB

32dB

26dB

-28dB

-28dB    20dB    26dB    30dB    32dB    34dB    36dB    37dB    38dB

Extremely low count

Linear range in FIG. 2

Low count in FIG. 2

Variance model $V_{AL} = K \dfrac{V_{BL}}{I^2}$

FIG. 3

Relative size of Gaussian filter

Example: STD of Gaussian filter when N = 1 to 4
I0=100

| Dimension | VarPower | VarScale |
|-----------|----------|----------|
| N=1 | 2 | 406.0075 |
| N=2 | 1 | 5.6841 |
| N=3 | 2/3 | 1.3700 |
| N=4 | 1/2 | 0.6726 |

Count

FIG. 4

EP 2 533 197 B1

F I G. 5

F I G. 6

FIG. 7

FIG. 8

F I G. 9A

F I G. 9B

F I G. 9C

F I G. 10A

F I G. 10B

F I G. 10C

F I G. 11A

F I G. 11B

F I G. 11C

**EP 2 533 197 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010284626 A

- US 2003099405 A

**Non-patent literature cited in the description**

- Adaptive streak artifact reduction in computed tomography resulting from excessive x-ray photon noise. **JIANG HSIEH.** MEDICAL PHYSICS. AIP, 01 November 1998, vol. 25, 2139-2147

- **JIANG HSIEH (GE.** Adaptive streak artifact reduction in CT resulting from excessive x-ray phone noise. *Med. Phys.,* 1998, vol. 25 (11), 2139-47